(19) Europäisches Patentamt
European Patent Office
Office européen des brevets

(11) Publication number: **0 026 052**
**A1**

# (12) EUROPEAN PATENT APPLICATION

(21) Application number: 80302993.3

(22) Date of filing: 28.08.80

(51) Int. Cl.³: G 01 N 27/64

(30) Priority: 25.09.79 GB 7933135

(43) Date of publication of application: 01.04.81 Bulletin 81/13

(84) Designated Contracting States: DE FR

(71) Applicant: NATIONAL RESEARCH DEVELOPMENT CORPORATION
P.O. Box 236 Kingsgate House 66-74 Victoria Street
London SW1E 6SL(GB)

(72) Inventor: Oliver, John Anthony
14 Westfield Close Laverstock
Salisbury SP1 1SG Wiltshire(GB)

(74) Representative: Russell, James et al,
Procurement Executive, Ministry of Defence Patents
1A4, Room 1932 Empress State Building Lillie Road
London SW6 1TR(GB)

## (54) Improvements in or relating to gas detecting apparatus.

(57) Gas detecting apparatus: for use in detecting and measuring concentrations of heavy organic gases in ambient atmospheres.

A problem with previous gas detecting apparatus has been that noise induced by wind or turbulence has reduced the useful operating range. The invention is able to operate in windy or turbulent conditions by the inclusion of one or more gas permeable screens (18) between the anode (14) and the cathode (1) and providing end plates (17) to prevent the movement of ions between anode and cathode by any other route.

The invention may be used to monitor anaesthetics, refridgerants and fire extinguishants and can be used as either a meter or as an alarm.

*Fig. 1.*

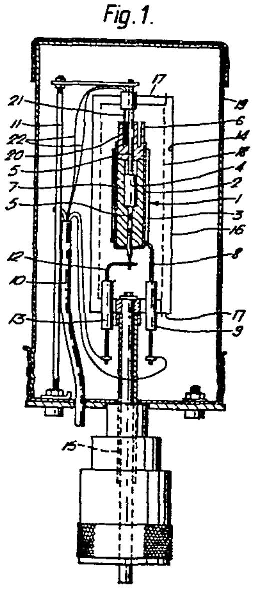


EP 0 026 052 A1

European
0026052



This invention relates to gas detecting apparatus, more especially for the detection of gases of relatively high densities dispersed in the atmosphere. In this specification the term Gas covers both gases and vapours.

Gas detecting apparatus for detecting traces of gases such as halogenated hydrocarbons in factories or in the open air, and working on the principle of charge transfer, has often been found to operate under conditions of low signal to noise ratio when operated in the electron capture mode at least partly as a result of unavoidable air currents causing a loss of ions. Detecting apparatus has been used in the work function mode in wind velocities of up to 15 $ms^{-1}$ before significant ion losses occur, however, operation in the work function mode gives a relatively insensitive instrument with a poor range of detectable concentrations.

The present invention seeks to provide a gas detecting apparatus which gives a high signal to noise ratio when operated in the electron capture mode, even in conditions of wind, draught or turbulence.

According to the present invention, a gas detecting apparatus has an electrical detecting element which provides an electrical output when more than a minimum concentration of a given contaminant gas is present in an ambient atmosphere, the detecting element having a cathode structure incorporating an ionising source and enclosed by and spaced from an anode structure at least part of which is an electrically conducting gauze, and having between the conducting gauze and the cathode structure, and spaced from both, a gas-permeable electrically conducting screen connected electrically as part of the anode structure.

The cathode and anode structures may be both substantially cylindrical and concentric. Preferably the anode structure has the conducting gauze and the gas-permeable screen arranged circumferentially and is provided with circular conducting end plates.

Desirably the gas-permeable screen consists of a wire helix concentric

BAD ORIGINAL

with the conducting gauze.

Alternatively the gas-permeable screen consists of a continuous gauze wound spirally around the cathode structure to form a 'swiss roll' configuration.

The gas detecting apparatus is preferably arranged for operation in the electron capture mode.

The ionising source is preferably tritium in the form of titanium hydride on a copper foil as part of the cathode structure.

Desirably the electrical detecting element is provided with an additional gas-permeable electrically conducting outer screen connected, in use, to earth, for elimination of the effect of unwanted ions. For protection from the effects of acid gases and particulate matter, the outer screen may include a layer of fine gauge copper gauze.

The cathode structure may be provided with an electric heating element for preventing condensation on the ionising source; amd to guard against overheating of the cathode structure it may also be provided with a thermistor, in contact therewith and spaced from the heating element, connected to temperature control equipment and arranged to switch the heating element off or on appropriately.

The invention will now be described, by way of example only, with reference to the accompanying drawings of which:

Figure 1 is a cross-sectional side elevation of a detector head; and
Figure 2 is a diagrammatic representation of the associated electrical circuitry.

In figure 1 a cathode assembly 1 has a copper cylinder 2, around which is fixed a tritium beta source of approximately 250 mCi in the form of titanium hydride mounted on copper foil 3 to form a cylindrical cathode 6.3mm diameter and 20mm long. In air the beta particles from the decay of tritium are slowed to thermal energies within a millimeter of the source, consequently any moisture on the foil surface will drastically reduce the efficiency of the detecting apparatus. To maintain the cathode above the dew point of water the copper cylinder 2 contains a resistive heating element 4 whose wires 5 are insulated with polytetrafluoroethylene sleeving. A cylindrical brass end-block closes one end of the copper cylinder 2. One insulated wire of heating element passes through end-block 6 and the other passes through the open end of the copper cylinder 2. The heating element 4 is spaced from end-block 6 by a polytetrafluoroethylene cylinder and the heating element is fixed in position and put into good thermal contact with the copper cylinder 2 by a potting compound 7, which in this embodiment is an epoxy resin although silicone may be used. The copper cylinder is connected near to its open end to a negative

BAD ORIGINAL

potential lead 8 which passes through an insulator 9 to an insulated terminal post and thence to a multicore cable 10 attached to a conducting detector support arm 11. The heating element wire which passes through the open end of the copper cylinder 2 is connected to a lead 12 which passes through an insulator 13 to an insulated terminal post and thence to the multicore cable 10. The other heating element wire is connected through the conducting detector support arm 11 to a common earth. Outside of the cathode and concentric with it is a cylindrical anode structure 14 which is electrically connected by a UHF plug to the input of an FET amplifier by lead 15 in a glass insulator. The anode structure has an outer anode gauze 16 which is 50mm long and 17.5mm diameter with circular copper conducting end plates 17. Within the gauze is a gas permeable screen 18 which is a wire helix of twenty swg tinned copper 50mm long and 14mm diameter. The helix is so dimensioned that when fully compressed it occupies 60% of its normal length. The inclusion of a helix as part of the anode structure gives an improved signal to noise ratio over an anode not having such a helix when used in the electron capturing mode in windy conditions. For example a detector having an anode structure with an outer gauze of 22mm diameter, a twenty swg copper spiral of 17.5mm diameter and an eignteen swg counterwound copper spiral of 14mm diameter, provided a tortuous ion path and is virtually impervious to wind gusts.

The anode structure is enclosed in an outer cylindrical screen 19 of fine gauge copper mounted on a perforated metal cylinder. The screen 19 is capped at each end and connected to the common earth.

The brass end-block 6 has a pocket 20 in which there is a thermistor 21 in thermal contact with the brass end-block. The leads 22 from the thermistor pass through the detector head and thence to the multicore cable 10. The screen of the multicore cable 10 is connected to the detector body and functions as the principal common connection to the operational amplifier 32. The multicore cable passes out of the detector and thence to the appropriate circuitry.

Figure 2 shows the cathode structure 1 and anode structure 14, the cathode is connected via wire 8 and a one megohm resistor 30 to the negative terminal of a polarising source, indicated as a battery 31. The polarising voltage may, however, be supplied by a DC to DC converter. The positive terminal of the polarising source is connected to the common earth. The cathode heating element 4 has one of its leads connected via conducting support arm 11 to the outer cylindrical screen 19 which is connected to the common earth. The other heater lead is connected via lead 12 and multicore

cable 10 to a supply of approximately six volts. The exact value of this heater supply voltage may be adjusted by means of a variable resistor (not shown) in order to give the required heat output from the heater. A power output of 50mW gives approximately 5°C rise in cathode temperature above ambient and provides a useful temperature operating range for the detecting apparatus of about 0°C to 30°C without condensation problems occurring even at high relative humidities.

The anode 14 is electrically connected to one input of a field effect transistor input operational amplifier 32 of type NE 536, the other input of the operational amplifier 32 is connected to the common earth. The input normally connected to the anode is also connected to the common earth when the detector is not in use.

The output of operational amplifier 32 forms the inverting input to a second operational amplifier 33 which is of type 741. The non-inverting input to the second operational amplifier is taken from a balance circuit and is adjusted to give a zero output for a zero gas concentration detected. The balance circuit is adjusted by means of potentiometer 34 which bridges a - 15V rail and a +15V rail via a parallel combination of a variable resistor 35 and the thermistor 21. The thermistor 21 is a 4K7 ohm thermistor and as the temperature of the detector rises and displaces the equilibrium:

$$(H_2O)_nO_2^- \rightleftharpoons (H_2O)_{n-1}O_2^- + H_2O$$

to the right and thereby increases the mobility of the hydrated oxygen ion current carriers, the thermistor, which has a negative temperature coefficient, counteracts the drift. Resistor 35 is adjusted to give minimal drift over the designed temperature range (0-30°C).

The thermistor 21 also provides a signal for thermostatic control circuitry (not shown) to switch the resistance heater on and off in order to regulate the cathode temperature to a desired level.

The polarising voltage generated by the polarising battery 31 has an optimum value of about 24 volts for low concentrations of all gases and about 33 volts for high gas concentrations, for example of freon 12. The optimum polarising voltage varies as a result of monitor design geometry and variations in strength of the tritium beta radiation source.

BAD ORIGINAL

At low field strengths, say $10Vcm^{-1}$ ions are blown out of the electrode region at low ambient air velocities. Athigh field strengths, say $100Vcm^{-1}$, the noise level is reduced but the increased field imparts a higher velocity to the negative ions, resulting in fewer collisions between ion and molecules with a consequent lowering of ionisation efficiency.

In use the detector can detect the presence of many organic gases and vapours for example: freon 12, halon 1301, n-pentane, benzene, ethyl acetate, acetone, methylene chloride, ethyl alcohol, trimethyl phosphite, carbon tetrachloride "penthrane", chloroform, "halothane", methyl salicylate, nitrobenzene, amyl acetate, chlorobenzene, diethyl malonate and ethyl cyanoacetate. In addition the detector will respond to some inorganic gases. Nitrogen dioxide may be detected and for this gas the anode should be fabricated of stainless steel or other unreactive metal. Each compound gives its own concentration dependent output characteristics.

The detector can be operated in either the negative ion or in the work function mode, depending on the polarising voltage used. The designed detectable ranges of concentrations for freon 12 with a single helix detector are:

Negative ion mode: 1.0 - 100% v/v with a detection limit of:

0.01% in still air

and 2.5% in 12 $ms^{-1}$ gusts;

Work-function mode 0.1 - 15% v/v with a detection limit of:

0.1% at all wind speeds.

These results correspond to a fixed electronics time constant of 45ms and a detector responce time of 10 ms.

The ion-molecule reactions taking place within the electrode region are can be represented approximately by:

$$^{3}H \xrightarrow[\text{moist air}]{\text{Beta and}} (H_2O)_nH+ \quad +(H_2O)_n \; O^-_2 \qquad \text{etc}$$

collected at cathode ($(H_2O)_nH+$)

major negative charge carrier, travels to anode ($(H_2O)_n O^-_2$)

and:

BAD ORIGINAL

$$(H_2O)_n \; O^-_2 + M \longrightarrow M' + nH_2O + O_2$$

charge transfer species ($(H_2O)_n O^-_2$); electron capturing material (M); slow moving ion lost from system by collision and recombination process ($M'$).

For freon 12 the dynamic range of the detector is 0.1% to 100% detection if both modes of operation are utilised. The output of operational amplifier 33 is set to 5 volts for 100% freon 12 in the negative ion mode and to 5 volts for 25% freon 12 in the work function mode by means of the operational amplifier gain control. The polarising voltage is normally set so that operation is in the electron capture mode.

The earthed outer screen 19 eliminates unwanted ions from outside the detector and also screens from acid gases such as oxides of nitrogen by means of the fine mesh copper gauze. Dust particles are also excluded by the fine mesh copper gauze.

By mounting the detector on a gantry of appropriate height freon 12 concentrations can be monitored at heights of, say 30 metres.

The detector may be protected from light rain by enclosing it in a glass fibre outer screen. This also reduces noise levels in windy conditions but increases the response time considerably to about 10 seconds.

The time required for gas to diffuse into the electrode region is inversely proportional to the air speed over the detector and is the major factor limiting response time. The gas diffusion time is of the order of 6 milliseconds for an air speed of 0.88 $ms^{-1}$.

The electronics time constant is a compromise between speed of response and background noise. A value in the range of 5 to 50 milliseconds is satisfactory. The electronics time constant is varied by altering the value of a damping capacitor in the feedback circuit (not shown) of operational amplifier 33.

The lowest detectable gas concentration is dependent on the electrical noise level which is governed by air velocity and the response time of the electronics. In still air and with an electronics time constant of 45ms the detection limit of freon 12 is about 20 ppm. At $1ms^{-1}$ air speed the minimum detectable concentration is one order greater with a single helix anode. If speed of response is of secondary importance the lowest detectable concentrations can be brought down at the expense of response time. This occurs particularly if there is shielding from the air stream or if the detector is enclosed in a diffusion screen.

The detector may be used as a quantitative measuring instrument or, by the inclusion of a level detector, as an alarm indicating when the concentration of say, an anaesthetic gas, refrigerant, or fire extinguishant rises above a preset limit. The detector will not ignite flammable gases such as anaesthetic gases.

In a modification to the electrical circuit, the polarising battery 31, instead of being connected where shown in Fig.2, is connected between the detec and the amplifier 32.

BAD ORIGINAL

CLAIMS

1. Gas detecting apparatus having an electrical detecting element providing an electrical output related to the concentration of contaminant gas present in the ambient atmosphere, characterised in that the detecting element has a cathode structure (1) incorporating an ionising source (3) and enclosed by and spaced from an anode structure (14) at least part of which is electrically conducting gauze (15) and has between the conducting gauze (15) and the cathode structure (1) and spaced from both at least one gas-permeable electrically conducting screen (17) connected electrically as part of the anode structure.

2. Gas detecting apparatus as claimed in claim 1 characterised in that the cathode structure (1) and the anode structure (14) are both substantially cylindrical and concentric.

3. Gas detecting apparatus as claimed in claim 2 characterised in that the anode structure (14) has the conducting gauze (15) and the gas permeable screen (17) arranged circumferentially and is provided with circular electrically conducting end-plates (16).

4. Gas detecting apparatus as claimed in claim 2 or claim 3 characterised in that the gas permeable screen (17) is a wire helix concentric with the conducting gauze (15).

5. Gas detecting apparatus as claimed in claim 2 or claim 3 characterised in that the gas-permeable screen (17) is a continuous gauze arranged in a spiral around the cathode structure (1)

6. Gas detecting apparatus as claimed in any preceding claim characterised in that the ionising source (3) is tritium in the form of titanium hydride on a copper foil as part of the cathode structure (1).

BAD ORIGINAL

7. Gas detecting apparatus as claimed in any preceding claim characterised in that the electrical detecting element is provided with a gas-permeable electrically conductive outer screen (18) connected, in use, to earth.

8. Gas detecting apparatus as claimed in claim 7 characterised in that the outer screen (18) includes a layer of fine electrically conductive gauze.

9. Gas detecting apparatus as claimed in any preceding claim characterised in that the cathode structure (1) has an electrical heating element (4).

10. Gas detecting apparatus as claimed in claim 9 characterised in that the cathode structure (1) is provided with a thermistor (20) in contact therewith, and spaced from the heating element (4), connected to temperature control equipment arranged to switch the heating element off or on appropriately.

BAD ORIGINAL

Fig. 1.

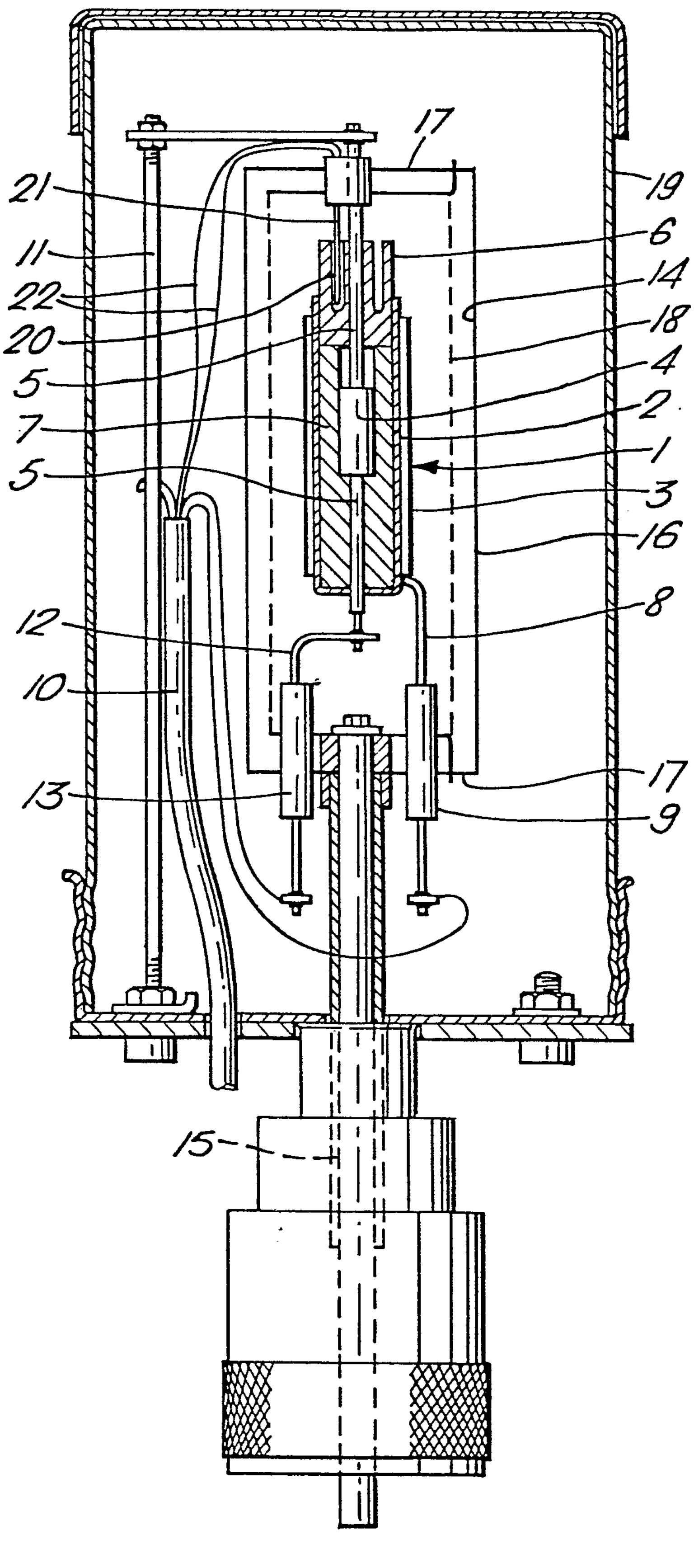

Fig. 2.

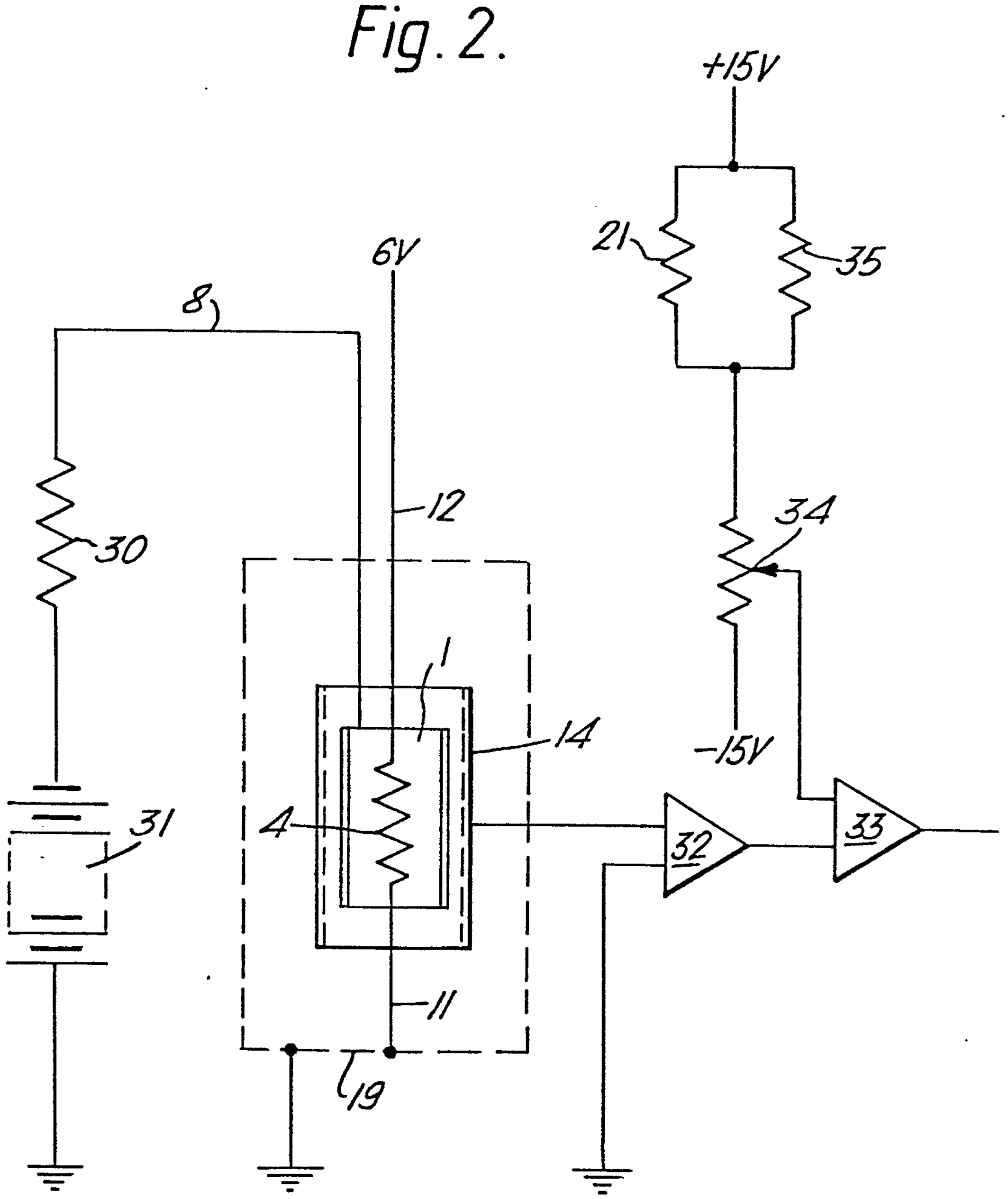

0026052

Application number

EP 80302993.3

European Patent Office

# EUROPEAN SEARCH REPORT

| Category | DOCUMENTS CONSIDERED TO BE RELEVANT<br>Citation of document with indication, where appropriate, of relevant passages | Relevant to claim | CLASSIFICATION OF THE APPLICATION (Int. Cl. 3) |
|---|---|---|---|
| | DE - B - 1 133 921 (SIEGMANN)<br>+ Column 4, lines 30-43; fig. 1,2 +<br>-- | 1,2 | G 01 N 27/64 |
| | CH - A - 391 331 (CERBERUS AG)<br>+ Page 4, claims 1,4 +<br>-- | 1,6 | |
| | FR - A1 - 2 288 978 (COMMISSARIATA L'ENERGIE ATOMIQUE)<br>+ Page 3, lines 1-5; page 6, claims 1,2 +<br>-- | 1,2,6 | |
| | | | TECHNICAL FIELDS SEARCHED (Int.Cl. 3) |
| | US - A - 2 968 730 (MINE SAFETY)<br>+ Column 2, lines 53-64; fig. 1 +<br>-- | 1,2 | G 01 N 27/00 |
| | US - A - 3 870 888 (LOVELOCK J.E.)<br>+ Column 2, lines 3-17; column 4, lines 8-20; fig. 1 +<br>---- | 1,6 | |

CATEGORY OF CITED DOCUMENTS

X: particularly relevant
A: technological background
O non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 27-11-1980 | ERBER |

EPO Form 1503.1 06.78